# EUROPEAN PATENT SPECIFICATION

(11) **EP 1 255 031 B1**
(45) Date of publication and mention of the grant of the patent: **19.12.2012**
(21) Application number: 02009677.2
(22) Date of filing: 29.04.2002
(51) Int. Cl.: F02B 67/00, F02B 67/10

(54) **Control system and method for vehicle having an internal combustion engine with turbocharger and a transmission**
Verfahren und Vorrichtung zur Steuerung einer Kraftfahrzeugmotors mit Turbolader und Transmission
Dispositif et méthode de réglage d'un moteur à véhicule avec turbo-surchargeur et transmission

(30) Priority: 02.05.2001 JP 2001135507
(43) Date of publication of application: 06.11.2002
(73) Proprietor: Toyota Jidosha Kabushiki Kaisha, Toyota-shi, Aichi 471-8571 (JP)
(72) Inventor: Ito, Yasushi, c/oToyota Jidosha Kabushiki Kaisha, Toyota-shi, Aichi-ken, 471-8571 (JP)
(74) Representative: TBK

(56) References cited:
- DE-A1- 19 815 712
- US-A- 3 913 419
- US-A- 6 089 018
- US-A1- 2002 006 848
- US-B1- 6 209 323

## Description

### BACKGROUND OF THE INVENTION

### 1. Field of the Invention

The invention generally relates to a control system for an internal combustion engine according to the preamble of claim 1 such as a diesel engine or a gasoline engine and a method according to the preamble of claim 6. More particularly, the invention relates to a system for controlling an internal combustion engine provided with a turbocharger, and a transmission coupled to the output side of that internal combustion engine.

### 2. Description of Related Art

When accelerating a vehicle in which is installed an internal combustion engine and a transmission, torque to drive the driven wheels, i.e., driving torque, is increased by increasing the intake air amount and the fuel supply amount to the internal combustion engine to increase the output thereof, in addition to downshifting with the transmission to increase the gear ratio as necessary. Therefore, to improve the acceleration performance of a vehicle, all that is necessary is to rapidly increase the output of the internal combustion engine and quickly increase the gear ratio. However, with an internal combustion engine having a turbocharger, for example, there is an unavoidable lag in the increase in boost pressure, and increasing the gear ratio increases the inertia force which follows a change in rotation speed of the rotating members of the internal combustion engine and the like. A sudden increase in the gear ratio, therefore, does not always directly result in an increase in drive torque. Furthermore, there is also the possibility that when there is an increase in the supply amount (load) of fuel to increase the output of the internal combustion engine, combustion will not be adequately carried out, resulting in the generation of smoke and the like.

Therefore, in controlling an internal combustion engine and a transmission to achieve the required acceleration, there are various restrictions and conditions, and control must be performed taking these into consideration. In this regard, the invention disclosed in Japanese Patent Application Laid-Open Publication No. 11-310062, for example, is configured such that acceleration is improved by having the output torque of the internal combustion engine during acceleration take the inertia torque, which causes a change in rotation speed, into consideration. More specifically, the invention disclosed in this publication is configured so as to control the output torque of the internal combustion engine during acceleration by first correcting the upper limit value of the input torque that is allowed by the transmission with the inertia torque that is brought about by a change in rotation of the rotating members, and then making that corrected upper limit torque the output torque upper limit value of the internal combustion engine.

Using a turbocharger to improve output performance of an internal combustion engine has been well known. The output torque of the internal combustion engine changes depending on the boost pressure from the turbocharger. There is, however, an unavoidable lag in the change of boost pressure as well as in the change in the resultant output torque. Moreover, the output torque of the internal combustion engine, which changes following this type of lag, and the output torque of the transmission do not always match. Further, the input torque of the transmission and the output torque of the internal combustion engine can also be controlled separately. While the invention disclosed in the above publication does take inertia torque during acceleration into consideration, it is not, however, configured such that control is performed taking other factors, such as the boost pressure, into consideration. Therefore, with the invention disclosed in the aforementioned publication, control which uses the turbocharger more effectively, or suitable control according to the boost pressure, is not sufficiently performed, and so there is room for improvement regarding this point.

Prior art control system are disclosed in DE 198 15 712 A1, US-B1- 6 209 323 and US 2002/006848A1.

### SUMMARY OF THE INVENTION

It is an object of the invention to provide a control system for a vehicle having an internal combustion engine with a turbocharger and a transmission, which is able to improve acceleration while meeting requirements for responsiveness and fuel efficiency and the like.

The object is solved by a system according to claim 1 or a method according to claim 6. Further developments of the invention are defined in the dependent claims.

According to a first aspect of the invention, there is provided a control system for a vehicle having an internal combustion engine with a turbocharger, of which an output torque is increased in accordance with an increase in a boost pressure of the turbocharger, a continuously variable transmission which can change a speed of the internal combustion engine in accordance with a gear ratio and is coupled to the internal combustion engine, and torque control means for controlling a torque to be input to the transmission from the internal combustion engine to be equal or less than a predetermined allowable torque. In this control system, the torque control means reduces the torque to be input to the transmission by a torque reduction amount in accordance with the boost pressure of the turbocharger by a torque reducing factor which reduces the torque to be input to the transmission by absorbing a portion of the torque to be output from the internal combustion engine.

According to the above aspect then, when controlling the input torque from the internal combustion engine to the transmission to be equal to, or less than, a predetermined allowable torque, such as the upper limit value, the torque reduction amount caused by the torque reducing factor is set based on the boost pressure, and a torque which is the torque resultant from subtracting the torque reduction amount caused by that torque reducing factor from the output torque of the internal combustion engine is input to the transmission. Therefore, because torque control which takes the boost pressure into consideration is possible, full advantage is able to be taken of the output performance of an internal combustion engine that uses a turbocharger.

According to the first aspect, the torque control means can be made able to reduce the input torque by controlling the inertia torque generated by a gear change with the transmission to increase the speed of the internal combustion engine.

By doing this, respective control of boost to the internal combustion engine and shifting with the transmission can be performed while keeping the input torque to the transmission within the allowable torque range. Accordingly, output performance of the internal combustion engine and responsiveness to shifting of the transmission are improved, and acceleration is able to be performed.

According to the first aspect, an operating mechanism which is driven by the internal combustion engine is further provided. The torque control means can be made able to reduce the input torque by controlling the torque absorbed by this operating mechanism.

By doing this, respective control of boost to the internal combustion engine and torque absorbed by the operating mechanism can be performed while keeping the input torque to the transmission within the allowable torque range. Accordingly, the vehicle is able to run taking full advantage of the output performance of the internal combustion engine, and the operating mechanism is able to be sufficiently driven.

According to a second aspect of the invention, there is provided a control system for a vehicle having an internal combustion engine with a turbocharger and a transmission, in which the transmission is coupled to the internal combustion engine in which an output torque increases according to an increase in a boost pressure, which changes a speed of the internal combustion engine based on a gear ratio set by the transmission. The control system is also provided with shift detecting means for detecting a shift by the transmission to increase the speed of the internal combustion engine, and boost pressure control means for, when a shift to increase the speed of the internal combustion engine is detected by the shift detecting means, increasing a boost pressure to higher than with any other shift.

According to this second aspect, when the gear ratio is increased thereby increasing the speed of the internal combustion engine, the boost pressure becomes higher than with any other shift. Therefore, even if a shift is performed to increase the speed of the internal combustion engine and, following this, a portion of the torque output from the internal combustion engine is used for, or absorbed in increasing the speed of the internal combustion engine, the boost pressure increases according to that absorbed torque and the output torque of the internal combustion engine increases. As a result, the torque required for running is sufficiently increased, thereby improving acceleration. Further, in any case other than the above acceleration, the boost pressure is relatively low such that the back-pressure of the internal combustion engine decreases. As a result of this decrease in back-pressure, so-called pumping loss is reduced, thereby improving fuel efficiency.

According to a third aspect of the invention, there is provided a control system for a vehicle having an internal combustion engine with a turbocharger and a transmission, in which the transmission is coupled to the internal combustion engine in which the limit speed that does not generate smoke increases following an increase in the boost pressure by the turbocharger, which changes a speed of the internal combustion engine based on a gear ratio set by the transmission. This control system is provided with transient control means for, in a transient state until an output state of power from the internal combustion engine changes to an output state in accordance with a required acceleration, shifting the output state of power from the internal combustion engine to a low speed-high load side in accordance with an increase in the boost pressure.

According to this third aspect, in the transient state of acceleration in which a lag is generated in an increase in the boost pressure, the output state of the internal combustion engine is shifted to the low speed-high load side in accordance with an increase in boost pressure. Accordingly, despite the demand for acceleration, at the point of lag in the increase in boost pressure, the internal combustion engine is on the whole controlled to a high speed-low load state. As a result, a situation such as that in which smoke is generated can be avoided, the driving torque is increased, thereby fulfilling the acceleration requirement, and driving with improved fuel efficiency is possible by controlling the internal combustion engine to a low speed-high load state following an increase in boost pressure.

### BRIEF DESCRIPTION OF THE DRAWINGS

Fig. 1 is a flowchart showing an example of control by a control system according to the invention;
Fig. 2 is a flowchart showing another example of control by a control system according to the invention;
Fig. 3 is a flowchart showing yet another example of control by a control system according to the invention;
Fig. 4 is a flowchart showing still yet another example of control by a control system according to the invention; and
Fig. 5 is a view showing a typical example of a power system of a vehicle in which an internal combustion engine to which the invention is applied is installed.

### DETAILED DESCRIPTION OF THE PREFERRED EMBODIMENTS

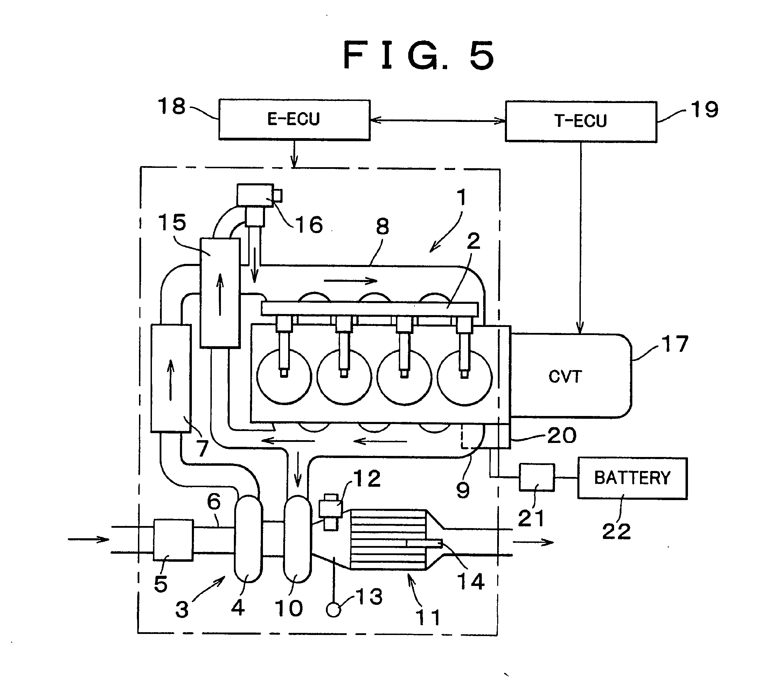

Hereinafter, the invention will be described based on an embodiment. The internal combustion engine installed in a vehicle to which the invention is applied is a power system for burning a fuel for an engine, such as a diesel engine or a gasoline engine, and outputting power. More particularly, the internal combustion engine installed in a vehicle to which the invention is applied is an internal combustion engine with a turbocharger. Fig. 5 schematically shows an example in which a direct injection type diesel engine (hereinafter referred to as simply "engine") 1 is used as a power source for the vehicle. This engine 1 is an internal combustion engine in which fuel is directly injected into the cylinders. A common rail type electronically controlled fuel injection system 2 is employed in order to enable fuel injection at a high pressure. This electronically controlled fuel injection system 2 can be of a structure that is well known.

Also, the engine 1 shown in Fig. 5 is provided with a turbocharger 3. An exhaust turbine type turbocharger is one type of turbocharger 3. In the example shown in Fig. 5, a turbocharger 3 is provided which is constructed such that it can change the boost pressure. This boost pressure is controlled by a variable nozzle for changing an injection angle of the exhaust with respect to the turbine, or by a wastegate valve (not shown). Further, a boost pressure sensor (not shown) is provided for detecting the boost pressure and outputting an electric signal corresponding thereto.

An intake air pipe 6 having an air cleaner 5 arranged somewhere therein is connected to an intake port of a compressor 4. To a discharge port of the compressor 4 is connected to an intake manifold 8 via an intake air cooler 7 for lowering the intake air temperature.

Also, an exhaust manifold 9 communicated with each cylinder is connected to an inflow port of a turbine 10 in the turbocharger 3. Furthermore, to an outflow port of this turbine 10 is connected a catalytic converter 11 provided with an exhaust purification catalyst. On an upstream side of this catalytic converter 11 is provided an air-fuel ratio sensor 12 and a pressure sensor 13 for detecting a pressure of the exhaust flowing into the catalytic converter 11. Moreover, a temperature sensor 14 is also provided for detecting the catalyst temperature. The exhaust path is from the exhaust manifold 9, through the catalytic converter 11, to a discharge port to the open air (not shown).

Here the exhaust purification catalyst will be described. In the example shown in Fig. 5, a NOx storage-reduction type catalyst is used. This catalyst absorbs NOx, a pollutant in the exhaust, in an oxidizing atmosphere in the form of nitrate nitrogen, reduces the absorbed nitrate nitrogen in a reducing atmosphere, and then releases it as nitrogen gas. Also, because active (nascent) oxygen is produced during absorption and reduction of the NOx, that active oxygen and the oxygen within the exhaust oxidizes, and thereby removes, soot (PM: particulate matter) adhered to the surface. Accordingly, it is necessary to change the atmosphere of the exhaust purification catalyst between an oxidizing atmosphere and a reducing atmosphere at predetermined intervals of time. This type of atmospheric change is performed by switching the air-fuel ratio between a lean air-fuel ratio having an excess of air (a larger air-fuel ratio than stoichiometric air-fuel ratio) and a rich air-fuel ratio in which the amount of fuel has been relatively increased (a smaller air-fuel than stoichiometric air-fuel ratio). Control to make the air-fuel ratio rich in order to release the nitrogen compound from the exhaust purification catalyst is preferably performed temporarily, with this type of temporarily rich air-fuel ratio referred to as a "rich spike."

Moreover, the engine shown in Fig. 5 is provided with an exhaust recirculation system for reducing the NOx in the exhaust. That is, the exhaust manifold 9 and the intake manifold 8 are connected via an EGR cooler 15 for cooling the exhaust to be recirculated and an EGR valve 16 for controlling the starting and stopping of recirculation as well as for controlling to maintain a constant recirculation rate (EGR rate).

To the output side of this engine 1 is coupled a continuously variable transmission (CVT) 17. For this continuously variable transmission 17, which is a transmission that is able to change gear ratios continually, a belt-type continuously variable transmission or a traction-type (toroidal) continuously variable transmission is used.

Also provided with the control system according to the invention are an engine electronic control unit (E-ECU) 18 for electronically controlling the fuel injection volume in the engine, the injection timing thereof, the starting and stopping of the exhaust recirculation, and the opening of the throttle valve (not shown) and the like, as well as a transmission electronic control unit (T-ECU) 19 for controlling the continuously variable transmission 17. These electronic control units 18 and 19 are mainly microcomputers, and are configured so as to control the throttle opening and fuel injection (i.e., engine load), or the gear ratio of the continuously variable transmission 17 (i.e., engine speed) and the like based on the required amount of output indicated by the accelerator opening and the like, vehicle speed, engine water temperature, oil temperature of the continuously variable transmission 17, and detection signals from each of the sensors 12, 13 and 14 and the like.

To the engine 1 described above is then coupled to a generator 20 driven by power output from the engine 1, which generates power. This generator 20 is connected to a battery 22 via an inverter 21. A controller, not shown, detects the state of charge (SOC) of the battery and controls the charge and discharge. Accordingly, when the generator 20 is operated to generate power, a portion of the output torque of the engine 1 is consumed in the generation of that power such that the torque input to the continuously variable transmission 17 decreases according to the amount of power generated.

This generator 20 and the battery 22 are used to supply power to various parts of the vehicle, or in the case of a hybrid vehicle which uses a motor as a driving power source other than the engine 1, the generator 20 and the battery 22 are used as a power source to drive that motor.

Fundamentally, the engine is controlled to consume the minimum amount of fuel in accordance with the required driving amount. An example of that control will now be briefly described. A target driving force is obtained based on the accelerator opening, which is indicative of the required driving amount, and the vehicle speed. A target output is then obtained based on this target driving force and vehicle speed. On one hand, a target engine speed (basic target engine speed) is obtained based on this target output. This can be done, for example, by obtaining beforehand an engine speed having the lowest fuel consumption with respect to the various outputs, preparing this as a map in advance, and then obtaining the target engine speed from the target output and that map. The gear ratio of the continuously variable transmission 17 is then controlled so as to achieve that target engine speed.

On the other hand, the target engine torque is obtained based on the target output and the engine speed. The engine load (specifically the throttle opening or the fuel injection volume) is controlled so as to output that target engine torque.

Meanwhile, an acceleration demand signal is input to the engine electronic control unit 18 or the transmission electronic control unit 19. This acceleration demand signal is, for example, a signal in accordance with the depression angle (accelerator opening) of an accelerator pedal (not shown), and is such that a demand for acceleration is determined by an increase in the accelerator angle. Various types of control signals other than that of the accelerator opening are also input to these electronic control units 18 and 19, such as those indicative of the vehicle speed, the engine speed, the boost pressure, the gear ratio set by the continuously variable transmission 17, the fuel injection volume, the state of charge of the battery 22, and the amount of power generated by the generator 20.

In a vehicle having the driving mechanism described above, when the output of the engine 1 is increased based on an acceleration demand and the gear ratio is increased, inertia torque is generated by the increase in rotation speed of various rotating elements, including the engine 1. Because a portion of the output torque of the engine 1 is absorbed as that inertia torque, the control system of the invention, which comprises mainly the electronic control units 18 and 19 controls as follows based on the boost pressure so as to take full advantage of the output performance of the engine 1.

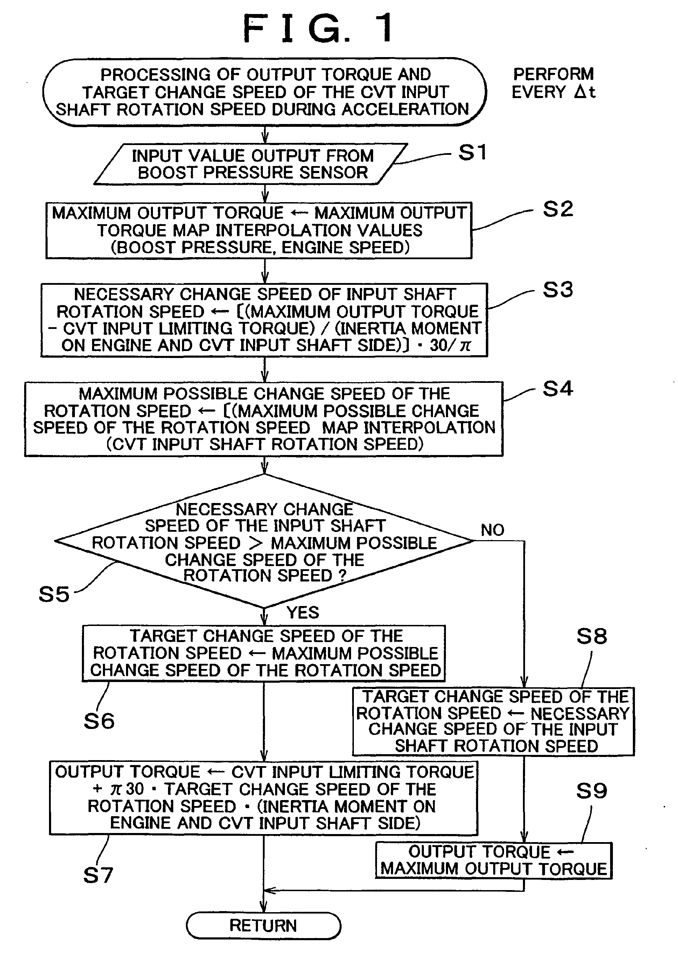

Fig. 1 is a flowchart showing an example of that control. The processing of the output torque and the change speed of the input shaft target rotation speed of the continuously variable transmission (CVT) 17 is performed according to this flowchart at short predetermined intervals of time Δt. In Fig. 1, first an output value from the boost pressure sensor is input to the engine electronic control unit 18 (Step S1), i.e., the boost pressure is detected. Then, a maximum output torque is calculated based on that boost pressure and the engine speed at that time (Step S2). Specifically, a maximum output torque map having, for example, the boost pressure and the engine speed as parameters is prepared in advance, and the maximum output torque is obtained based on the detected boost pressure, the engine speed, and that map after interpolation is performed as necessary. Alternatively, the maximum output torque can also be calculated based on an operational equation prepared beforehand.

Meanwhile, an upper limit of the input torque to the continuously variable transmission 17 is determined beforehand in view of structural strength, durability and the like. The torque after this input limiting torque has been subtracted from the maximum output torque of the engine 1 is the torque able to be consumed (absorbed) as inertia torque during acceleration. In other words, when the inertia torque becomes larger than the torque after this input limiting torque has been subtracted from the maximum output torque, the torque input to the continuously variable transmission 17 drops and the acceleration of the vehicle decreases. Also, conversely, when the inertia torque decreases, the shift responsiveness decreases due to the decrease in the shifting speed, and what is more, problems arise such as a decrease in the durability of the continuously variable transmission 17.

Therefore, a necessary change speed of the input shaft rotation speed is obtained which corresponds to the shifting speed (Step S3). As is shown in Fig. 1, this is obtained by processing in which the difference of the CVT input limit torque subtracted from the maximum output torque obtained based on the engine speed and boost pressure at that time is first divided by the inertia moment that generates an inertia force which decreases the input torque of the continuously variable transmission 17 following an increase in the gear ratio, i.e., by the inertia moment on the side of the engine 1 and the CVT input shaft, and then the units are made the same.

Further, the speed of the shift performed by the continuously variable transmission 17 is predetermined according to the structure of the continuously variable transmission 17, such as the shape and oil pressure of the continuously variable transmission 17. Therefore, the maximum possible change speed of the rotation speed is obtained based on that input rotation speed (Step S4), which is able to be done according to a previously prepared map, for example.

Then, the necessary change speed of the input shaft rotation speed, which is obtained from the maximum output torque, and the maximum possible change speed of the rotation speed, which is determined by the continuously variable transmission 17, are compared (Step S5). That is, it is determined whether the necessary change speed of the input shaft rotation speed is greater than the maximum possible change speed of the rotation speed. If this determination in Step S5 is YES, it means that the necessary change speed of the input shaft rotation speed that is obtained based on the maximum output torque, i.e., the shifting speed, exceeds the shifting speed possible by the continuously variable transmission 17, i.e., the maximum possible change speed of the rotation speed. Accordingly, in this case, the shifting speed possible with this structure, i.e., the maximum possible change speed of the rotation speed, is used as the target change speed of the rotation speed (Step S6). Then the continuously variable transmission 17 is controlled such that the shift based on the acceleration demand is produced with the shift speed obtained in Step S6, i.e., with a shift speed possible with the structure.

When a shift is performed so as to achieve that target change speed of the rotation speed, the resultant inertia torque becomes a torque reducing factor that reduces the torque to be input to the continuously variable transmission 17 from the engine 1. Accordingly, the torque which is the sum of that inertia torque and the CVT input limiting torque becomes the output torque of the engine 1 that is allowed at that time (Step S7). As in Fig. 1, that inertia torque is obtained with processing in which the target change speed of the rotation speed is multiplied by the inertia moment on the side of the engine 1 and the CVT input shaft, and the units are made the same. The engine load is then controlled so as to generated that output torque.

Conversely, if the determination in Step S5 is NO, i.e., if the necessary speed change of the input shaft rotation speed (shifting speed) obtained from the maximum output torque is equal to or, or less than, the maximum possible change speed of the rotation speed (shifting speed) determined by the structure, then that necessary speed change of the input shaft rotation speed is used as the target change speed of the rotation speed (Step S8). In this case, because the maximum output torque is obtained based on the boost pressure, the target change speed of the rotation speed, i.e., the shifting speed, is obtained based on the boost pressure at the time of the acceleration demand.

Moreover, the maximum output torque is used as the output torque of the engine 1 (Step S9) so as not to be restricted by the input torque upper limit value of the continuously variable transmission 17.

Then, the continuously variable transmission 17 is controlled so as to perform a shift at the shifting speed obtained in Step S8, and the engine load is controlled so as to become equal to the output torque obtained in Step S9.

Therefore, according to the control shown in the figure, when the maximum torque able to be output in accordance with the boost pressure at the time of the acceleration demand is output and the inertia torque following a shift is able to be increased such that the input torque of the continuously variable transmission 17 exceeds the upper limit value, the engine 1 is controlled so as to output the maximum torque in accordance with that boost pressure and a shift is performed extremely quickly within the range in which the input torque of the continuously variable transmission 17 does not to exceed the upper limit value. As a result, acceleration control is performed that takes the maximum possible advantage of the output performance of the engine 1 and the shifting performance of the continuously variable transmission 17, thereby improving transient shifting responsiveness and acceleration responsiveness during acceleration.

Hereinafter, the relationship between the aforementioned embodiment and the invention will be briefly described. The shifting that generates the inertia torque corresponds to the torque reducing factor in this invention. This inertia torque also corresponds to a torque reduction amount. Further, the functional means in Step S8, or the means for performing shifting at the target change speed of the rotation speed obtained in Step S8, corresponds to torque control means·in this invention.

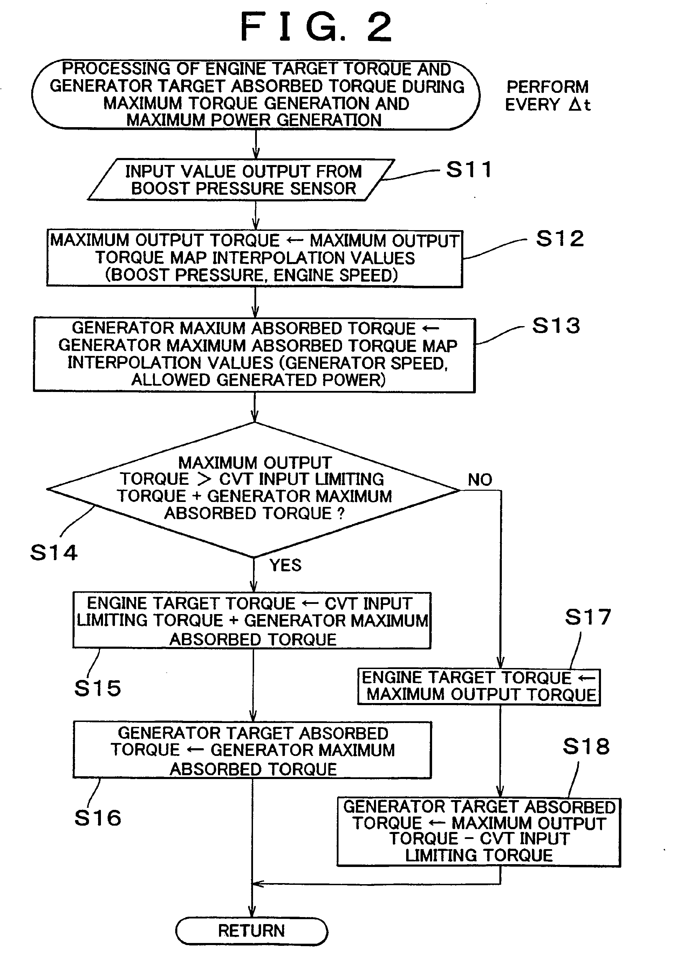

However, the factor that lowers the torque to be input to the continuously variable transmission 17 by absorbing a portion of the torque output by the engine 1 is not limited to shifting following an acceleration demand. For example, the generator 20 can also be a torque reducing factor. The example of control shown in Fig. 2 takes into consideration the torque absorbed by this generator 20.

The flowchart in Fig. 2 is used in the processing of the engine target torque and the generator target absorbed torque at the time of maximum torque generation and maximum power generation. The routine in the flowchart is carried out at short predetermined intervals of time Δt. First, just like in the example of control shown in Fig. 1, the output value from the boost pressure sensor is input (Step S11), and the maximum output torque is obtained based on that boost pressure value and the engine speed (Step S12). This control is just like that in Step S1 and Step S2 in Fig. 1.

Meanwhile, the maximum torque able to be absorbed by driving the generator 20 at that time is obtained (Step S13). Because the power generated by the generator 20 is used to recharge the battery 22, it is restricted by the power that the battery 22 is able to accept. Therefore, the maximum torque that can be absorbed by the generator 20 can be obtained based on the allowed generated power and the speed of the generator 20. More specifically, it is obtained using a map prepared in advance and performing interpolation as necessary.

Then, the maximum output torque obtained based on th boost pressure is compared with the sum of the CVT input limiting torque and the generator maximum absorbed torque (Step S14). That is, it is determined whether the torque input to the continuously variable transmission 17 exceeds the upper limit value even when the maximum limit torque of the generator 20 is absorbed by the maximum torque that the engine 1 is able to output in accordance with the boost pressure at that time.

When the determination in Step S14 is YES, the sum of the CVT input limiting torque and the generator maximum absorbed torque is set as the engine target torque because the output torque from the engine 1 can not be increased to the maximum torque in accordance with the boost pressure (Step S15). Further, the generator maximum absorbed torque obtained in Step S13 is set to the generator target absorbed torque (Step S16). The engine 1 and the generator 20 are then controlled based on their respective target values.

In contrast to this, when the determination in Step S14 is NO, i.e., when as much torque as possible is absorbed by the generator 20 such that the input torque to the continuously variable transmission 17 does not exceed the upper limit value even when the engine 1 outputs the maximum torque in accordance with the boost pressure, that maximum torque is set to the engine target torque (Step S17). In addition to this, the torque which is the torque resultant from subtracting the CVT input limiting torque from that maximum output torque is set as the generator target absorbed torque (Step S18). That is, the output torque from the engine 1 is set as the maximum limit in accordance with the boost pressure and the absorbed torque of the generator 20 is set such that the input torque to the continuously variable transmission 17 becomes the upper limit value.

Therefore, according to the control shown in Fig. 2, because the output torque from the engine 1 and the absorbed torque of the generator 20 are controlled so that the input torque to the continuously variable transmission 17 becomes the upper limit value, the driving torque increases to the maximum such that acceleration of the vehicle is able to be improved. Also, because the output torque from the engine 1 increases as quickly as possible in the maximum limiting torque range according to the boost pressure at that time, the responsiveness of the output of the engine 1 is improved while driving in a region of good fuel efficiency with high boost and a heavy load becomes possible.

Hereinafter, the relationship between the embodiment described above and this invention will be briefly described. The control from driving the generator 20 with the output from the engine 1 corresponds to the torque reducing factor in this invention. Further, the torque absorbed by the generator 20 corresponds to the torque reduction amount. Also, the functional means of Step S16 and Step S18 in Fig. 2 corresponds to torque control means in this invention.

When boosting is performed with the turbocharger 3, if the boost pressure is increased, the fuel supply amount (fuel injection volume) can be increased accordingly. As a result, engine torque can be increased, thereby improving acceleration performance and engine performance of the vehicle. On the other hand, because the back pressure of the engine 1 increases, the increase in the boost pressure becomes a factor that increases pumping loss of the engine 1, thereby reducing fuel efficiency.

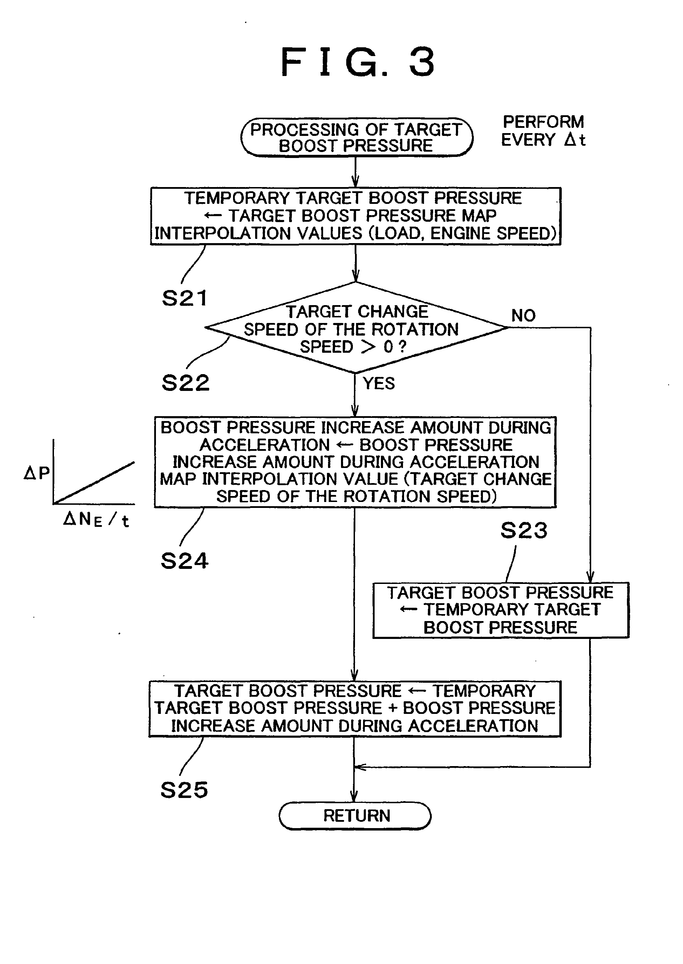

In order to satisfy both of these contradicting conditions, the control system of this invention is constructed so as to perform the control shown in Fig. 3. That is, Fig. 3 is a flowchart for performing the processing of the target boost pressure, which is carried out at short predetermined intervals of time Δt. First, a temporary target boost pressure is set based on the current driving state of the engine 1 (Step S21). This is done, for example, by using a map with the engine load and the engine speed as parameters, performing interpolation as necessary, and setting the boost pressure according to the driving state of the engine at that time.

Next, it is determined whether the target change speed of the rotation speed is greater than 0 (Step S22). The target rotation speed while running is obtained as the speed having the lowest fuel consumption, based on the vehicle speed and the output demand amount and the like indicated by the accelerator opening and the like, as described above. Shifting is then performed so as to achieve that target rotation speed. Normally with shifting of the continuously variable transmission 17, a primary lag rotation speed is obtained with respect to that final target rotation speed and the gear ratio is continuously changed so as to match that rotation speed. The amount of change over time of the rotation speed in this case is the target change speed of the rotation speed.

Accordingly, during acceleration that increases the target rotation speed (target input rotation speed), the target change speed of the rotation speed becomes a larger positive value the greater the final target rotation speed. Also, during deceleration, that target change speed of the rotation speed becomes a negative value, and further, during steady running with no shifting, that target change speed of the rotation speed becomes 0. Therefore, when the determination in Step S22 is NO, the vehicle is in a state of steady running with no shifting performed, or is in a deceleration state. Because of this, in this case, the temporary boost pressure is set as the target boost pressure (Step S23).

On the other hand, when the determination in Step S22 is YES, the boost pressure increase amount according to the target change speed of the rotation speed is obtained (Step S24). This is because during acceleration the boost pressure is increased, thereby increasing the output torque from the engine 1. As a result, the boost pressure increase amount is obtained using, for example, a map with the target change speed of the rotation speed as the parameter (ΔNE/t), just as in Fig. 3. More specifically, the boost pressure increase amount (ΔP) increases the greater the target change speed of the rotation speed.

The boost pressure increase amount obtained in this way is then added to the temporary target boost pressure, and this sum is then set as the target boost pressure (Step S25).

Then the turbocharger 3 is controlled so as to achieve the target boost pressure set in Step S23 or Step S25. This control of the boost pressure is performed, for example, by operating a variable nozzle turbo or a wastegate valve.

Therefore, according to the control shown in Fig. 3, because the boost pressure increases to be relatively high during acceleration, the output torque of the engine 1 increases, thereby improving acceleration. Moreover, because the boost pressure decreases to be relatively low when not accelerating, the back pressure of the engine 1 decreases such that pumping loss is reduced accordingly, thus improving fuel efficiency. That is, both acceleration from increased boost pressure and fuel efficiency are able to be improved at the same time.

Next, the relationship between the embodiment shown in Fig. 3 and this invention will be described. The functional means in Step S22 in Fig. 3 corresponds to shift detecting means in this invention, and the functional means in Step S23 and Step S25 corresponds to boost pressure controlling means in this invention.

When increasing the boost pressure, however, inertia force is generated following the compression of air when the speed of the turbocharger is increased. This causes an unavoidable lag, which, in the aforementioned turbocharger 3, is relatively large. In contrast, the lag in the increase in the fuel injection volume to the engine 1 and in the shift is less than the lag in the increase in the boost pressure. Because of this, when there is a demand for acceleration, smoke is generated when the engine load is quickly increased. Moreover, increasing the engine load gradually along with the increase in boost pressure or shifting to avoid generating smoke may drastically reduce acceleration responsiveness. Therefore, with the control system according to this invention, the target driving point during acceleration is set as follows.

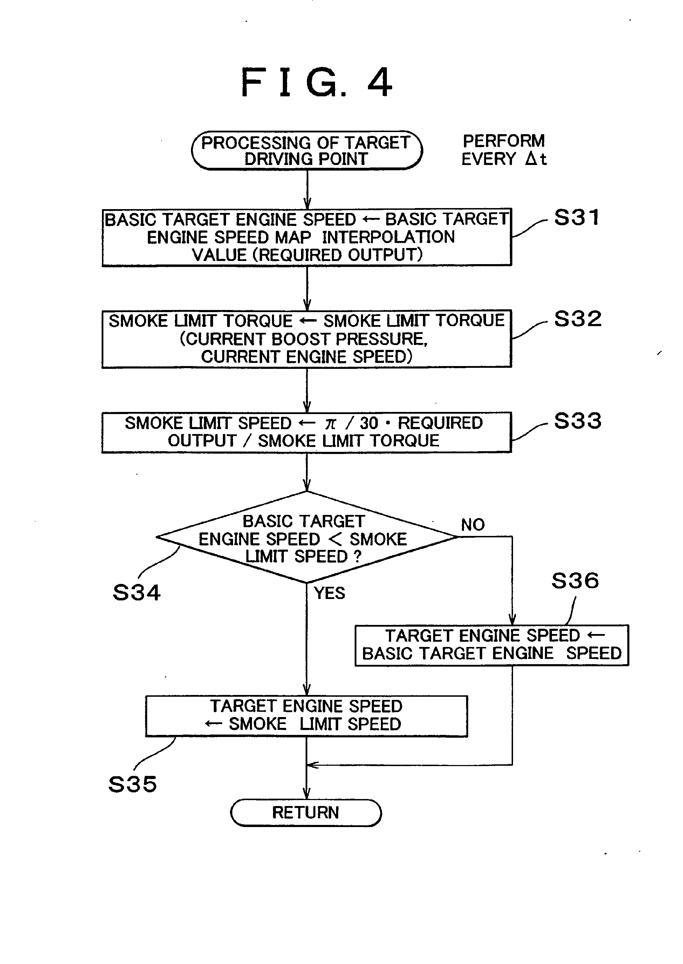

Fig. 4 is a flowchart showing an example of this control, which is performed at short predetermined intervals of time Δ t. First, when there is a demand for acceleration, a basic target engine speed is set based on that output demand amount (Step S31). This basic target engine speed is set to have the lowest fuel consumption, as described above.

Also, a smoke limit torque is obtained based on the boost pressure and the engine speed at this time (Step S32). This is obtained using data obtained in advance in accordance with the displacement and shape of the engine 1, the allowable smoke amount and the like.

Next, the engine speed (smoke limit speed) for generating that smoke limit torque is obtained with the output demand amount (Step S33). As shown in Fig. 4, this calculation is done by dividing the required output by the smoke limit torque and making the units the same.

Next, the smoke limit speed and the basic target engine speed are compared (Step S34). When the determination in Step S34 is YES due to the basic target engine speed being lower than the smoke limit speed, the smoke limit speed is made the target engine speed (Step S35). That is, even if there is an acceleration demand, when the smoke limit torque is low due to the fact that there is no increase in the boost pressure and thus the smoke limit speed becomes the higher speed, the target speed of the engine 1 is set to that smoke limit speed so that the engine speed increases. This is achieved by increasing the gear ratio of the continuously variable transmission 17 (downshifting), which results in a driving torque that is in accordance with the acceleration demand.

In contrast, when the determination in Step S34 is No due to the basic target engine speed being equal to, or greater than, the smoke limit speed, the basic target engine speed is made the target engine speed (Step S36). That is, when the boost pressure is gradually increased after an acceleration demand, the smoke limit torque gradually increases as a result, which causes the smoke limit speed to decrease accordingly. As a result, when the smoke limit speed matches the basic target engine speed, the determination in Step S34 is NO. Thereafter, the engine 1 is controlled according to the basic target engine speed.

Accordingly, with the embodiment shown in Fig. 4, in a transient state of acceleration, the driving state of the engine shifts to a low speed-high load state in accordance with an increase in boost pressure. Therefore, the functional means in Step S35 and Step S36 in Fig. 4 corresponds to transient control means in the invention according to this invention. Then with the control in Fig. 4, the engine speed changes toward the basic target engine speed set for optimal fuel efficiency as the boost pressure increases toward the pressure in accordance with the acceleration demand. Accordingly, the engine 1 is able to be driven so as to consume the least amount of fuel when it is past the acceleration transient state. As a result, acceleration and a reduction in fuel consumption are able to be improved while the generation of smoke is inhibited.

The foregoing embodiment was described using an engine 1 to which a continuously variable transmission, as the transmission, is coupled. However, the invention is not limited to this embodiment. In another embodiment, the transmission coupled to the internal combustion engine can be a stepped transmission or a continuously variable transmission constructed to be controlled in steps. Moreover, acceleration control generating inertia torque and a generation state for driving a generator were given as examples of the torque reducing factor. However, the torque reducing factor in this invention need only perform some sort of operation using a portion of the output torque of the engine and reduce the input torque to the transmission accordingly. Therefore, the torque reducing factor in this invention may also include driving various auxiliary accessories. Furthermore, the means for accepting power generated by the generator is not limited to a battery, but can also be a capacitor such as an electric storage device or the like.

## Claims

1. A control system for a vehicle having an internal combustion engine (1) with a turbocharger (3), of which an output torque is increased in accordance with an increase in a boost pressure of the turbocharger (3), a continuously variable transmission (17) which can change a speed of the internal combustion engine (1) in accordance with a gear ratio and is coupled to the internal combustion engine (1), and torque control means (18, 19) for controlling a torque input to the continuously variable transmission (17) from the internal combustion engine (1) to be equal to or less than a preset allowed torque,
**characterized in that** the torque control means (18, 19) reduces the torque input to the continuously variable transmission (17) by a torque reduction amount in accordance with the boost pressure of the turbocharger (3) by a torque reducing factor which reduces the torque input to the continuously variable transmission (17) by absorbing a portion of a torque output from the internal combustion engine (1) by the inertia moment on the side of the internal combustion engine (1) and the continuously variable transmission (17) by increasing the speed of the internal combustion engine (1) by changing the gear ratio of the continuously variable transmission (17).

2. The control system according to claim 1, **characterized in that** the torque control means (18, 19) are means for reducing the input torque by controlling an inertia torque generated following a shift to increase the speed of the internal combustion engine (1) with the continuously variable transmission (17).

3. The control system according to claim 1 or 2, **characterized in that** an operating mechanism (20) driven by the internal combustion engine (1) is further provided, and the torque control means (18, 19) are means for reducing the input torque by controlling the torque to be absorbed by this operating mechanism (20).

4. A control system according to any one of claims 1 to 3, **characterized by** comprising:
shift detecting means (19) for detecting a shift of the continuously variable transmission (17) to increase the speed of the internal combustion engine (1); and
boost pressure control means (18, 19) for, when a shift to increase the speed of the internal combustion engine (1) for absorbing a portion of the torque is detected, increasing the boost pressure higher than with any other shift.

5. A control system according to any one of claims 1 to 4, **characterized in that**:
a limit speed of the internal combustion engine (1) at which smoke is not generated increases following an increase in a boost pressure by the turbocharger (3),
comprising transient control means (18, 19) for, in a transient state until an output state of a power of the internal combustion engine (1) changes to an output state in accordance with an acceleration demand, shifting the output state of the power of the internal combustion engine (1) to a low speed-high load side in accordance with an increase in the boost pressure.

6. A method for controlling a vehicle having an internal combustion engine (1) with a turbocharger (3), and a continuously variable transmission (17), in which the continuously variable transmission (17), which can change a speed of the internal combustion engine (1) in accordance with a gear ratio, is coupled to the internal combustion engine (1), in which an output torque increases in accordance with an increase in a boost pressure, for controlling a torque input to the continuously variable transmission (17) from the internal combustion engine (1) to be equal to, or less than, a preset allowed torque,
**characterized by** setting a torque reduction amount in accordance with the boost pressure of the turbocharger (3) by absorbing a portion of a torque output from the internal combustion engine (1) using a torque reducing factor which reduces the input torque to the continuously variable transmission (17) by the inertia moment on the side of the internal combustion engine (1) and the continuously variable transmission (17) by increasing the speed of the internal combustion engine (1) by changing the gear ratio of the continuously variable transmission (17).

7. A method according to claim 6, **characterized in that**
a shift of the continuously variable transmission (17) to increase the speed of the internal combustion engine (1) is detected, and when a shift to increase the speed of the internal combustion engine (1) for absorbing a portion of the torque is detected, the boost pressure is increased higher than with any other shift.

8. A method according to claim 6 or 7, **characterized in that**
in a transient state until an output state of a power of the internal combustion engine (1) changes to an output state in accordance with an acceleration demand, the output state of the power of the internal combustion engine (1) is shifted to a low speed-high load side in accordance with an increase in the boost pressure.

## Patentansprüche

1. Steuerungssystem für ein Fahrzeug, das eine Brennkraftmaschine (1) mit einem Turbolader (3), deren Abgabemoment gemäß einer Erhöhung eines Ladedrucks des Turboladers (3) erhöht wird, ein stufenlos einstellbares Getriebe (17), das eine Drehzahl der Brennkraftmaschine (1) gemäß einem Übersetzungsverhältnis ändern kann und mit der Brennkraftmaschine (1) gekoppelt ist, und eine Momentsteuerungseinrichtung (18, 19) zum Steuern eines von der Brennkraftmaschine (1) zu dem stufenlos einstellbaren Getriebe (17) eingegebenen Moments hat, um gleich wie oder geringer als ein voreingestelltes zulässiges Moment zu sein,
**dadurch gekennzeichnet, dass**
die Momentsteuerungseinrichtung (18, 19) das zu dem stufenlos einstellbaren Getriebe (17) eingegebene Moment um einen Momentverringerungsbetrag gemäß dem Ladedruck des Turboladers (3) durch einen Momentverringerungsfaktor verringert, der das zu dem stufenlos einstellbaren Getriebe (17) eingegebene Moment durch Absorbieren eines Teils eines von der Brennkraftmaschine (1) abgegebenen Moments durch das Trägheitsmoment an der Seite der Brennkraftmaschine (1) und des stufenlos einstellbaren Getriebes (17) durch Erhöhen der Drehzahl der Brennkraftmaschine (1) durch Ändern des Übersetzungsverhältnisses des stufenlos einstellbaren Getriebes (17) verringert.

2. Steuerungssystem nach Anspruch 1, **dadurch gekennzeichnet, dass** die Momentsteuerungseinrichtung (18, 19) eine Einrichtung zum Verringern des eingegebenen Moments durch Steuern eines Trägheitsmoments ist, das infolge eines Schaltens, um die Drehzahl der Brennkraftmaschine (1) zu erhöhen, mit dem stufenlos einstellbaren Getriebe (17) erzeugt wird.

3. Steuerungssystem nach Anspruch 1 oder 2, **dadurch gekennzeichnet, dass** des Weiteren ein Betätigungsmechanismus (20), der durch die Brennkraftmaschine (1) angetrieben wird, vorgesehen ist, und die Momentsteuerungseinrichtung (18, 19) eine Einrichtung zum Verringern des eingegebenen Moments durch Steuern des Moments, um durch diesen Betätigungsmechanismus (20) absorbiert zu werden, ist.

4. Steuerungssystem nach einem der Ansprüche 1 bis 3, **dadurch gekennzeichnet, dass** es folgendes aufweist:
eine Schalterfassungseinrichtung (19) zum Erfassen eines Schaltens des stufenlos einstellbaren Getriebes (17), um die Drehzahl der Brennkraftmaschine (1) zu erhöhen; und
eine Ladedrucksteuerungseinrichtung (18, 19) zum, wenn ein Schalten, um die Drehzahl der Brennkraftmaschine (1) zum Absorbieren eines Teils des Moments zu erhöhen, erfasst wird, Erhöhen des Ladedrucks höher als bei irgendeinem anderen Schalten.

5. Steuerungssystem nach einem der Ansprüche 1 bis 4, **dadurch gekennzeichnet, dass**
sich eine Grenzdrehzahl der Brennkraftmaschine (1), bei der Rauch nicht erzeugt ist, infolge einer Erhöhung des Ladedrucks durch den Turbolader (3) erhöht,
und das Steuerungssystem eine Übergangssteuerungseinrichtung (18, 19) aufweist zum, in einem Übergangszustand bis ein Abgabezustand einer Leistung der Brennkraftmaschine (1) sich zu einem Abgabezustand gemäß einer Beschleunigungsanforderung ändert, Schalten des Abgabezustands der Leistung der Brennkraftmaschine (1) zu einer Niedrigdrehzahl-Hochlastseite gemäß einer Erhöhung des Ladedrucks.

6. Verfahren zum Steuern eines Fahrzeugs, das eine Brennkraftmaschine (1) mit einem Turbolader (3) und ein stufenlos einstellbares Getriebe (17) hat, wobei das stufenlos einstellbare Getriebe (17), das eine Drehzahl der Brennkraftmaschine (1) gemäß einem Übersetzungsverhältnis ändern kann, mit der Brennkraftmaschine (1) gekoppelt ist, in der sich ein Abgabemoment gemäß einer Erhöhung eines Ladedrucks erhöht, zum Steuern eines von der Brennkraftmaschine (1) zu dem stufenlos einstellbaren Getriebe (17) eingegebenen Moments, um gleich wie oder geringer als ein voreingestelltes zulässiges Moment zu sein,
**gekennzeichnet durch**
Festlegen eines Momentverringerungsbetrags gemäß dem Ladedruck des Turboladers (3) **durch** Absorbieren eines Teils eines von der Brennkraftmaschine (1) abgegebenen Moments unter Verwendung eines Momentverringerungsfaktors, der das zu dem stufenlos einstellbaren Getriebe (17) eingegebene Moment um das Trägheitsmoment an der Seite der Brennkraftmaschine (1) und des stufenlos einstellbaren Getriebes (17) **durch** Erhöhen der Drehzahl der Brennkraftmaschine (1) **durch** Ändern des Übersetzungsverhältnisses des stufenlos einstellbaren Getriebes (17) verringert.

7. Verfahren nach Anspruch 6, **dadurch gekennzeichnet, dass**
ein Schalten des stufenlos einstellbaren Getriebes (17), um die Drehzahl der Brennkraftmaschine (1) zu erhöhen, erfasst wird, und wenn kein Schalten, um die Drehzahl der Brennkraftmaschine (1) zum Absorbieren eines Teils des Moments zu erhöhen, erfasst wird, der Ladedruck höher als bei irgendeinem anderen Schalten erhöht wird.

8. Verfahren nach Anspruch 6 oder 7, **dadurch gekennzeichnet, dass** in einem Übergangszustand, bis ein Abgabezustand einer Leistung der Brennkraftmaschine (1) sich zu einem Abgabezustand gemäß einer Beschleunigungsanfrage ändert, der Abgabezustand der Leistung der Brennkraftmaschine (1) zu einer Niedrigdrehzahl-Hochlastseite gemäß einer Erhöhung des Ladedrucks verschoben wird.

## Revendications

1. Système de commande pour un véhicule comportant un moteur à combustion interne (1) muni d'un turbocompresseur (3), dont on augmente le couple de sortie selon l'augmentation d'une pression de suralimentation du turbocompresseur (3), d'une transmission à variation continue (17) qui peut changer une vitesse du moteur à combustion interne (1) en accord avec un rapport de vitesse et est couplée au moteur à combustion interne (1), et d'un moyen de commande de couple (18, 19) destiné à commander un couple transmis à la transmission à variation continu (17) par le moteur à combustion interne (1) pour qu'il soit inférieur ou égal à un couple admissible préréglé,
**caractérisé en ce que** le moyen de commande de couple (18, 19) réduit le couple transmis à la transmission à variation continue (17) par une quantité de réduction de couple en fonction de la pression de suralimentation du turbocompresseur (3) par un facteur de réduction de couple qui réduit le couple transmis à la transmission à variation continue (17) en absorbant une partie d'un couple délivré par le moteur à combustion interne (1) par le moment d'inertie côté moteur à combustion interne (1) et la transmission à variation continue (17) en augmentant la vitesse du moteur à combustion interne (1) en modifiant le rapport de vitesse de la transmission à variation continue (17).

2. Système de commande selon la revendication 1, **caractérisé en ce que** les moyens de commande de couple (18, 19) sont des moyens destinés à réduire le couple transmis en commandant un couple d'inertie généré à la suite d'un changement de vitesse visant à augmenter la vitesse du moteur à combustion interne (1) avec la transmission à variation continue (17).

3. Système de commande selon la revendication 1 ou 2, **caractérisé en ce qu'**un mécanisme d'actionnement (20) entraîné par le moteur à combustion interne (1) est par ailleurs fourni, et les moyens de commande de couple (18, 19) sont des moyens destinés à réduire le couple transmis en commandant le couple devant être absorbé par ce mécanisme d'actionnement (20).

4. Système de commande selon l'une quelconque des revendications 1 à 3, **caractérisé en ce qu'**il comprend :
un moyen de détection de changement de vitesse (19) destiné à détecter un changement de vitesse de la transmission à variation continue (17) visant à augmenter la vitesse du moteur à combustion interne (1) ; et
un moyen de commande de pression de suralimentation (18, 19) destiné à augmenter la pression de suralimentation plus qu'avec n'importe quel autre changement de vitesse lorsqu'un changement de vitesse destiné à augmenter la vitesse du moteur à combustion interne (1) pour absorber une partie du couple est détecté.

5. Système de commande selon l'une quelconque des revendications 1 à 4, **caractérisé en ce que** :
une vitesse limite du moteur à combustion interne (1) à laquelle il n'y a pas de génération de fumée augmente suite à l'augmentation d'une pression de suralimentation par le turbocompresseur (3),
il comprend un moyen de commande transitoire (18, 19) destiné à décaler l'état de sortie de la puissance du moteur à combustion interne (1) à un niveau bas régime-vitesse faible selon l'augmentation de la pression de suralimentation, dans un état transitoire jusqu'à ce qu'un état de sortie d'une puissance du moteur a combustion interne (1) change en un état de sortie en accord avec une demande d'accélération.

6. Procédé de commande d'un véhicule ayant un moteur à combustion interne (1) muni d'un turbocompresseur (3), et d'une transmission à variation continue (17), où la transmission à variation continue (17), qui peut changer une vitesse du moteur à combustion interne (1) selon un rapport de vitesse, est couplée au moteur à combustion interne (1), où un couple de sortie augmente selon l'augmentation d'une pression de suralimentation, pour commander un couple transmis à la transmission à variation continue (17) par le moteur à combustion interne (1) pour qu'il soit inférieur ou égal à un couple admissible préréglé,
**caractérisé par** le réglage d'une quantité de réduction du couple en accord avec la pression de suralimentation du turbocompresseur (3) en absorbant une partie d'un couple délivré par le moteur à combustion interne (1) en utilisant un facteur de réduction de couple qui réduit le couple transmis à la transmission à variation continue (17) par le moment d'inertie côté moteur à combustion interne (1) et la transmission à variation continue (17) en augmentant la vitesse du moteur à combustion interne (1) en modifiant le rapport de vitesse de la transmission à variation continue (17).

7. Procédé selon la revendication 6, **caractérisé en ce que**
un changement de vitesse de la transmission à variation continue (17) visant à augmenter la vitesse du moteur à combustion interne (1) est détecté, et lorsqu'un changement visant à augmenter la vitesse du moteur à combustion interne (1) pour absorber une partie du couple est détecté, la pression de suralimentation augmente plus qu'avec n'importe quel autre changement de vitesse.

8. Procédé selon la revendication 6 ou 7, **caractérisé en ce que**
dans un état transitoire qui dure jusqu'à ce qu'un état de sortie d'une puissance du moteur à combustion interne (1) change en un état de sortie en accord avec une demande d'accélération, l'état de sortie de la puissance du moteur à combustion interne (1) est décalé vers un niveau bas régime-vitesse faible en accord avec une augmentation de la pression de suralimentation.
